# EUROPÄISCHE PATENTSCHRIFT

(11) **EP 1 827 643 B1**
(45) Veröffentlichungstag und Bekanntmachung des Hinweises auf die Patenterteilung: **25.03.2009**
(21) Anmeldenummer: 05822040.1
(22) Anmeldetag: 08.12.2005
(51) Int. Cl.: B01D 5/00, B01D 45/06, B29C 47/76

(54) **VORRICHTUNG ZUR ABSCHEIDUNG VON DAMPFF\RMIGEN STOFFEN ODER AEROSOLEN**
DEVICE FOR SEPARATING VAPOROUS SUBSTANCES OR AEROSOLS
DISPOSITIF POUR FAIRE SE DEPOSER DES SUBSTANCES SOUS FORME DE VAPEUR OU DES AEROSOLS

(30) Priorität: 15.12.2004 DE 202004019361 U
(43) Veröffentlichungstag der Anmeldung: 05.09.2007
(73) Patentinhaber: Berbel Ablufttechnik Gmbh, 48432 Rheine (DE)
(72) Erfinder: BERLING, Udo, 48496 Hopsten (DE); WEIBEL, Matthias, 48496 Hopsten-Schale (DE)
(74) Vertreter: Vossius, Corinna
(86) Internationale Anmeldenummer: PCT/EP2005/013137
(87) Internationale Veröffentlichungsnummer: WO 2006/066734

(56) Entgegenhaltungen:
- BE-A- 410 058
- DE-C- 542 493
- GB-A- 1 566 718
- US-A- 1 834 534
- US-A1- 2003 037 730
- US-A1- 2004 069 243
- PATENT ABSTRACTS OF JAPAN Bd. 011, Nr. 085 (C-410), 14. März 1987 (1987-03-14) & JP 61 238316 A (SUMITOMO METAL IND LTD), 23. Oktober 1986 (1986-10-23)

## Beschreibung

Die vorliegende Erfindung bezieht sich auf eine Vorrichtung zur Abscheidung von dampfförmigen Stoffen und/oder Aerosolen mit einem Gebläse, zumindest einer Ansaugöffnung, einem Luftführungskanal mit einer mehrfachen Umlenkung der Strömungsrichtung des Luftstroms und zumindest einer Ausblasöffnung.

Bei der Verarbeitung von Kunststoffen wird ein Ausgangsmaterial sehr häufig erhitzt und im Rahmen des nachfolgenden Verarbeitungsvorganges umgeformt. Wird der Kunststoff in geschlossenen Systemen verarbeitet, entstehen Emissionen nur in einem vergleichsweise geringen Umfang. So wird beim Spritzgießen von Kunststoff das neu gegossene Formteil im Regelfall bereits im geschlossenen Werkzeug bis unter die Schmelztemperatur heruntergekühlt, so daß es nach dem Öffnen des Werkzeugs seine endgültige Form beibehält. Das Kunststoff-Ausgangsmaterial ist zu dem Zeitpunkt, zu dem es das geschlossene Werkzeug verläßt, schon so weit heruntergekühlt, daß auf der Oberfläche des neu hergestellten Formteils kaum noch Dämpfe oder Aerosole entstehen.

Anders ist es, wenn die herzustellenden Kunststoffprodukte zunächst noch flüssig oder zähflüssig das Werkzeug verlassen und das herzustellende Kunststoffprodukt erst danach offen in der Umgebungsluft bis unter den Schmelzpunkt abkühlt. Dies ist beispielsweise bei Extrusionsverfahren der Fall, wie sie beispielsweise zur Herstellung von Kunststoffolien angewandt werden.

Bei der Extrusion tritt eine flüssige Schmelze von Kunststoff durch eine Düse aus. Erst während der nachfolgenden Abkühlung des Kunststoffs in der Umgebungsluft verfestigt sich dieser und behält seine Folienform. Dabei wird grundsätzlich zwischen den Blas- und die Gießfolien-Extrusionsverfahren unterschieden. Aufgrund der hohen Temperatur, die der flüssige Kunststoff beim Verlassen der Düse hat, können sich chemische Bestandteile der Materialien, aus denen die jeweilige aus der Düse ausgeblasene Kunststoffmischung hergestellt ist, von der ausgeblasenen Kunststoffmasse trennen und sich mit der Umgebungsluft vermischen. Bei diesen Chemikalien kann es sich um gasförmige Substanzen handeln, die aus dem Kunststoff verdampfen, oder um feste oder flüssige Partikel, die sich bei flüssigen Tropfen als Nebel und bei Feststoffen als Staub oder Rauch mit der Umgebungsluft vermischen.

Je nachdem, um welche chemischen Substanzen es sich handelt, können diese dampfförmigen Stoffe oder Aerosole für erhebliche Geruchsbelästigungen sorgen, gesundheitsschädlich sein und/oder bei Tropfenbildung die Umgebung um die Extrusionsmaschine herum durch einen Niederschlag verschmutzen. Insbesondere können Tropfen auf die frisch hergestellte Folie fallen, wodurch diese verschmutzen. Die Dämpfe und/oder Aerosole sind nicht nur belastend für die Personen, die diese mit der Atemluft aufnehmen, der Niederschlag der Dämpfe und/oder Aerosole verursacht dann erhebliche Kosten für die Reinhaltung des Extruders und seiner Umgebung.

Um die aus den dampfförmigen Stoffen und/oder Aerosolen verursachten Folgewirkungen zu vermeiden oder zumindest zu verringern, ist es bekannt, die Umgebungsluft von Extrudern abzusaugen und an die Außenluft abzugeben. Bei einem solchen Vorgehen werden die frei werdenden Dämpfe und Aerosole nicht aufgefangen und geordnet entsorgt, sondern einfach in die Umwelt ausgeblasen. Dabei geht nicht nur die Prozeßwärme aus dem heißen Kunststoff für eine weitere Nutzung verloren, sondern unter Umständen auch eine große Menge von warmer Raumluft im Produktionsgebäude, für die die zugeführte Frischluft wieder aufgeheizt werden muß. Noch größere Energieverluste können sich ergeben, wenn die Ersatzluft auf das Raumtemperaturniveau abgekühlt werden muß, um eine Prozeßsicherheit zu gewährleisten. Aber auch die schädlichen Substanzen werden nicht fachgerecht entsorgt, sondern verbleiben in der Atmosphäre und schlagen sich an anderer Stelle nieder.

Um die Belastung durch dampfförmige Stoffe und/oder Aerosole bei der Verarbeitung von Kunststoffen zu verringern, ist es die Aufgabe der vorliegenden Erfindung, eine an sich bekannte Vorrichtung für die Absaugung von Luft mit gasförmigen Stoffen und/oder Aerosolen so zu verbessern, daß ein erheblicher Teil dieser dampfförmigen Stoffen und/oder Aerosole abgeschieden wird und geordnet entsorgt werden kann.

Die US 2004/069243 offenbart eine Vorrichtung zur Abscheidung von dampfförmigen Stoffen und/oder Aerosolen, wobei ein Luftführungskanal eine Anzahl von Leitelementen aufweist, durch die über eine Förderstrecke ein Luftstrom in alternierende Richtungen geleitet wird. Die in den Luftführungskanal hineinragenden Spitzen der Leitelemente weisen im wesentlichen einen gleichmässigen Abstand auf.

Die BE 410 058 A offenbart ebenfalls eine Vorrichtung zur Abscheidung von Partikeln und Flüssigkeiten aus Gasen mit alternierend angeordneten Leitelementen. Die stromabwärts weisenden Flächen der Leitelemente beschreiben dabei eine Kurve.

Die Aufgabe wird für eine gattungsgemäße Vorrichtung gelöst, indem der Luftführungskanal eine Anzahl von Leitelementen aufweist, durch die über eine Förderstrecke der Luftstrom in alternierende Richtungen geleitet wird, wobei in den Luftführungskanal ragende Spitzen der Leitelemente über eine Förderstrecke einen im wesentlichen gleichmäßigen Abstand aufweisen und die Spitzen zumindest annähernd an die Mittellinie des Förderkanals heranreichen, und die stromaufwärts weisenden Flächen eines jeden Leitelementes in einem steileren Winkel zum Luftstrom stehen als dessen stromabwärts weisende Flächen.

Aufgrund der mehrfachen Richtungsumlenkung im Luftführungskanal erfolgt eine Sichtung zwischen den in der Luft bewegten dampfförmigen Stoffen und den Aerosolen sowie den übrigen gasförmigen Bestandteilen der Luft. Die Aerosole bewegen sich aufgrund ihrer spezifischen Dichte auf der Außenbahn einer gekrümmten Förderstrecke und neigen dort dazu, an der Oberfläche der Leitelemente sowie der seitlichen Wandungen des Luftförderkanals anzuhaften. Darüber hinaus kühlen sich die im Luftstrom bewegten Dämpfe ab, und die gasförmigen Substanzen werden wieder flüssig oder fest. In diesem Aggregatzustand können sie genauso wie die übrigen Aerosole an den Oberflächen der Leitelemente bzw. der Wandungen des Luftführungskanals abgeschieden werden. Die abgeschiedenen Substanzen können analysiert werden, um daraus Rückschlüsse auf die chemische Zusammensetzung der hergestellten Folie abzuleiten.

Weitere vorteilhafte Ausgestaltungen und Abwandlungen der Erfindung ergeben sich aus der nachfolgenden Beschreibung, der kennzeichnenden Merkmalen der Unteransprüche und der beigefügten Zeichnung.

Die Erfindung soll nun anhand eines Ausführungsbeispiels näher erläutert werden.
Es zeigen:
- Figur 1:: eine Ansicht auf eine komplette Abscheidevorrichtung,
- Figur 2:: eine Ausschnittsansicht des Luftführungskanals mit einer Darstellung der Strömungsrichtungen in einem Luftführungskanal,
- Figur 3:: eine Darstellung des Luftströmungskanals mit den Winkelmaßen der Leitflächen der Leitelemente, und
- Figur 4:: eine Darstellung, an welche Stellen sich Dämpfe und/oder Aerosole innerhalb des Luftführungskanals niederschlagen.

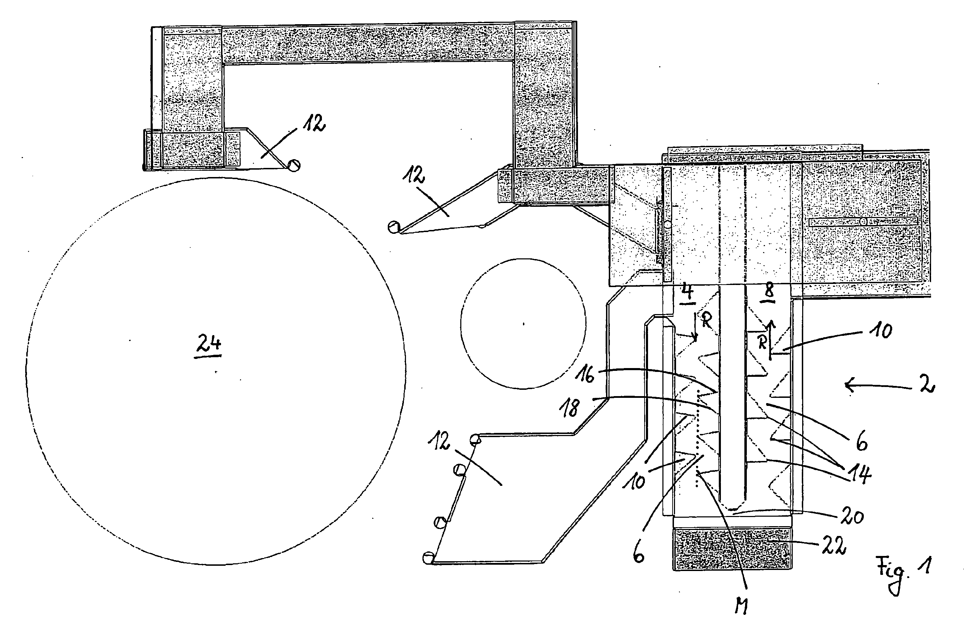

In Fig. 1 ist eine erfindungsgemäße Abscheidevorrichtung 2 in einer Schnittansicht dargestellt. Die Abscheidevorrichtung 2 besteht im wesentlichen aus einer Ansaugöffnung 4, einem Luftführungskanal 6 und einer Ausblasöffnung 8. Zeichnerisch nicht näher dargestellt ist ein Sauggebläse, mit dem ein Luftstrom durch die Abscheidevorrichtung 2 befördert wird. Das Gebläse kann der Abscheidevorrichtung 2 vor- oder nachgeordnet sein, oder es ist in die Abscheidevorrichtung 2 integriert. Im Luftführungskanal 6 sind eine Anzahl von Leitelementen 10 angeordnet, die den Luftstrom von einer allgemeinen Strömungsrichtung R alternierend in eine davon abweichende Richtung lenken. Die mit den Dämpfen und/oder Aerosolen versetzte Luft wird über Ansaugstutzen 12 angesogen und der Ansaugöffnung 4 der Abscheidevorrichtung 2 zugeführt.

Auf dem Weg durch den Luftführungskanal 6 wird der Luftstrom um Spitzen 14 der Leitelemente 10 herumgeführt. Die Abscheidung der Dämpfe und/oder Aerosole beruht im wesentlichen auf der mehrfachen Richtungsumlenkung des durch den Luftführungskanal 6 hindurchgeführten Luftstroms. Bei der mehrfachen Richtungsumlenkung wird der Luftstrom in Richtungen gelenkt, die von der allgemeinen Strömungsrichtung R abweichen. Die Spitzen 14 sind Formkörper, die am weitesten an die Mittellinie M des Luftführungskanals 6 in der Strömungsrichtung R heranragen und um die der Luftstrom mit einer Krümmung von zumindest 45° herumgeführt ist. Die Spitze 14 ist der am weitesten an die Mittellinie M heranreichende Rand der stromaufwärts weisenden Fläche 16, die der Strömungsrichtung R entgegengerichtet ist.

In Strömungsrichtung R gesehen liegt hinter der Spitze 14 eine stromabwärts weisende Fläche 18, die ihrerseits wieder den Luftführungskanal 6 seitlich begrenzt. Insgesamt finden sich im Luftführungskanal 6 mehrere Leitelemente 10, die in Strömungsrichtung R gesehen abwechselnd auf gegenüberliegenden Seiten des Luftführungskanals 6 und in einem Längenversatz zueinander angeordnet sind. Aus der Abfolge von mehreren Leitelementen 10 ergibt sich so ein geschlängelter Luftführungskanal 6, in dem die durch den Luftführungskanal 6 bewegte Luft ständig ihre Bewegungsrichtung ändert.

Im Ausführungsbeispiel sind die stromaufwärts und stromabwärts weisenden Flächen 16, 18 als plane Flächen dargestellt. Davon abweichend können die Flächen der Leitelemente 10 jedoch auch einen gekrümmten, bogenförmigen oder ein- oder mehrfach gekanteten Verlauf aufweisen. Im Ausführungsbeispiel besteht der Luftführungskanal 6 aus drei Abschnitten - einem Abschnitt mit einer im wesentlichen senkrecht abwärts gerichteten, einem mit einer annähernd waagerecht verlaufenden und einem mit einer im wesentlichen senkrecht nach oben gerichteten Strömungsrichtung R. Der Luftführungskanal 6 kann auch mit nur einem oder mehreren Abschnitten versehen sein, die eine davon abweichende Ausrichtung aufweisen. Auch die Länge des Luftführungskanals 6 kann den Bedürfnissen angepaßt werden. Um eine angemessene Abscheidequote zu erzielen, ist eine mehrfache Umlenkung des Luftstroms - mindestens fünf Umlenkungen - bei einer Mindestluftgeschwindigkeit und eine Mindestverweildauer der Luft in dem Luftführungskanal erforderlich. Die Abscheidequote kann auch erhöht werden, indem ein kleinerer oder größerer Anteil des Luftstroms, der den Luftführungskanal 6 passiert hat, zurück zur Ansaugöffnung 4 befördert wird, von wo aus dieser Anteil noch einmal den Luftführungskanal 6 passiert.

Wie aus der Darstellung in Fig. 1 ersichtlich ist, verfügt der Luftführungskanal 6 über eine Förderabschnitt, der im wesentlichen nach unten gerichtet ist, und über einen Förderabschnitt, der im wesentlichen nach oben gerichtet ist. Die beiden Abschnitte sind voneinander durch die waagerechte Umlenkungszone 20 getrennt. Im Bereich der Umlenkungszone 20 befindet sich eine Sammelvorrichtung 22, in der sich die im Luftführungskanal 6 abgeschiedenen Dämpfe und/oder Aerosole ansammeln können.

Von dem Extruder ist in Fig. 1 nur eine Kühlwalze 24 gezeigt, die bei einem Castextruder Verwendung findet, um den von der Extruderdüse ausgeblasenen flüssigen Kunststoff so weit abzukühlen und zu verfestigen, daß der Folienfilm von der Kühlwalze 24 abgehoben und auf einer Rolle aufgewickelt werden kann.

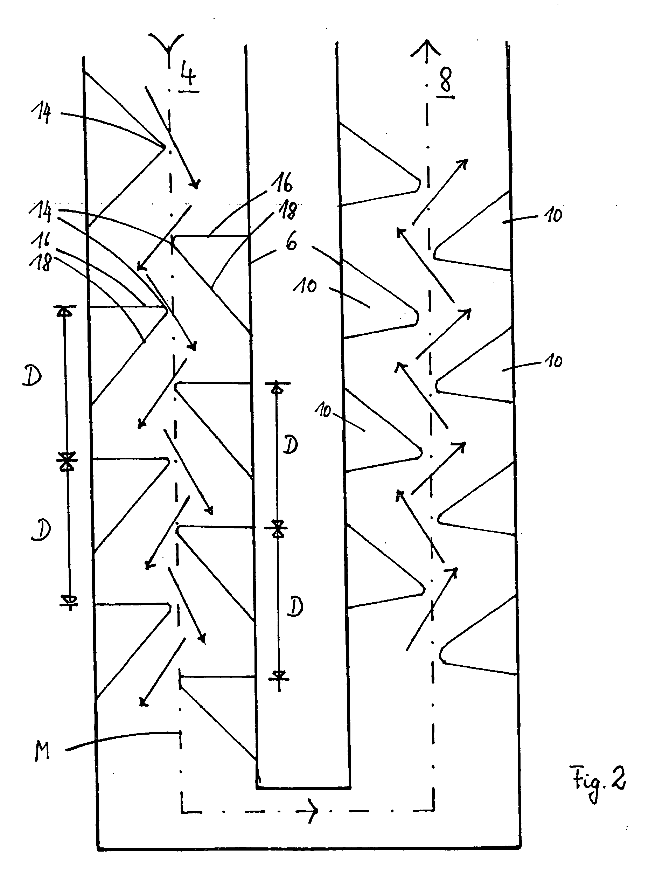

In Fig. 2 ist der Luftführungskanal 6 in einer vergrößerten Ansicht gezeigt. Die strichpunktierte Linie bezeichnet die allgemeine Strömungsrichtung R, in der die durch den Luftführungskanal 6 bewegte Luft durch diesen hindurchbewegt wird. Abweichend von der allgemeinen Strömungsrichtung R ergibt sich jedoch auf Teilstrekken des Luftführungskanals 6 eine von der allgemeinen Strömungsrichtung R abweichende Bewegungsrichtung des Luftstroms. Die auf den Teilstrecken von der allgemeinen Strömungsrichtung R abweichende Bewegungsrichtung ist durch die in vollen Linien dargestellten Pfeile angedeutet. Aus der Fig. 2 ist ersichtlich, daß der Luftstrom im Bereich der Leitelemente 10 in alternierende Richtungen geleitet wird.

Eine Besonderheit des in Fig. 2 dargestellten Ausführungsbeispiels ist darin zu sehen, daß die auf einer Seite des Luftführungskanals 6 angeordneten Leitelemente 10 in einem in etwa gleichmäßigen Abstand D voneinander im Luftführungskanal 6 angeordnet sind. Im Verhältnis zu den auf der einen Seite des Luftführungskanals 6 angeordneten Leitelement 10 sind die auf der gegenüberliegenden Seite angeordneten Leitelemente 10 in Strömungsrichtung R gesehen um etwa die Hälfte des Abstandes D versetzt angeordnet. Durch diese Anordnung ergibt sich für die Luftführung eine in der Schnittsansicht gut erkennbare, annähernd gleichmäßige Schlängellinie des Luftstroms.

Über die Höhe des freien Kanalquerschnitts gesehen, muß der Luftstrom in dem Bereich, der direkt benachbart zur Spitze 14 ist, eine nur kurze Strecke zurücklegen, um um die Spitze 14 herumzugelangen. Diejenigen Teile des Luftstroms, die in einem zur Spitze 14 entfernteren Bereich des Luftführungskanals 6 um diese herumgeführt werden, müssen eine erheblich längere Strecke zurücklegen. Aufgrund dieser Wegdifferenzen, je nach Entfernung zur Spitze 14, die mit Geschwindigkeitsdifferenzen einher gehen können, ergibt sich ein Differenzierungspotential für die im Luftführungskanal 6 bewegte Luft sowie der in dieser Luft enthaltenen Dampf- und/oder Aerosolpartikel. Die unterschiedliche Dichte und Massenträgheit der jeweiligen Bestandteile führt zur einer unterschiedlichen Bewegungsbahn der betreffenden Bestandteile durch den Luftführungskanal 6. Durch die im Verhältnis zur Luft unterschiedlichen Dichte der Dampfpartikel und/oder der Aerosole weicht die Bewegungsbahn dieser Bestandteile von der Bewegungsbahn der Gasbestandteile ab. Da es den Gasbestandteilen des Luftstroms wegen der geringen spezifischen Dichte vergleichsweise leicht fällt, die Bewegungsrichtung aufgrund der Abfolge von aufeinanderfolgenden Spitzen 14 zu verändern, können die Gase mit einem vergleichsweise geringen Widerstand und mit einer hohen Geschwindigkeit durch den Luftführungskanal 6 hindurchgeführt werden und den darin vorgesehenen Richtungsumlenkungen folgen. Aufgrund der Geschwindigkeits- bzw. Wegdifferenzen über die Höhe des Querschnittes des Luftführungskanals 6 und der aufeinanderfolgenden Richtungsumkehr bewegen sich die Dampfbestandteile und/oder Aerosole, die in der Luft enthalten sind, auf einer abweichenden Bewegungsbahn und kommen mit den Innenoberflächen des Luftführungskanals 6 in Kontakt und haften dort an. In Folge der Anhaftung sind diese Bestandteile damit aus dem Luftstrom abgeschieden und können dort nach Bedarf entnommen werden.

Um eine gute Abscheidwirkung zu erzielen, sind die stromaufwärts weisenden Flächen 16 so angeordnet, daß der in die allgemeine Strömungsrichtung R bewegte Luftstrom auf die stromaufwärts weisenden Flächen 16 auftrifft. An den Flächen 16 entstehen Verwirbelungen des Luftstroms, die turbulent und gegenläufig zur Strömungsrichtung R ausfallen können. Insbesondere können sich infolge der Ausgestaltung des Strömungskanals rotierende Luftwalzen bilden. Die stromabwärts weisenden Flächen 18 eines Leitelementes 10 sind so ausgebildet, daß sie in etwa parallel liegen zur Strömungsrichtung des um das entsprechende Leitelement 10 herumgeführten Luftstroms. Durch die von der gegenüberliegenden Seitenwand des Luftführungskanals 6 herausragende Spitze 14 des in Strömungsrichtung R nachfolgenden Leitelementes wird der Luftstrom an der stromabwärts weisenden Fläche 18 zwangsweise entlanggeführt.

Wie der Darstellung des Ausführungsbeispiels in den Figuren zu entnehmen ist, wird ein Teil der Luftführungskanal 6 teilweise von den Flächen der Leitelemente 10 und teilweise von seitlichen Seitenwänden des Schachtgehäuses des Luftführungskanals 6 begrenzt. Abweichend vom Ausführungsbeispiel müssen die Leitelemente 10 nicht zwangsläufig als separate Bauteile in das Schachtgehäuse eingesetzt sein, sondern das Schachtgehäuse selbst kann mit seinen Seitenwänden so gestaltet sein, daß sich die im Ausführungsbeispiel gezeigte alternierende Luftführung ausbildet. Umgekehrt können die Leitelemente 10 so ausgebildet sein, daß die Seitenwände des Schachtgehäuses keinen Kontakt zum Luftstrom haben. Der Luftführungskanal 6 muß nicht vollständig geschlossen ausgebildet sein, sondern kann Öffnungen aufweisen, durch die zusätzliche Luft oder Flüssigkeiten in den Luftführungskanal 6 eingeleitet werden können.

Dadurch, daß die Spitzen 14 bis in die Mitte des Luftführungskanals 6 vorspringen, muß sich der Luftstrom zwangsweise immer um die aufeinanderfolgenden Spitzen 14 in einer gekrümmten Richtung entlangbewegen. Der durch den Luftführungskanal 6 bewegte Luftstrom kann insbesondere nicht in einem geraden, sich mit hoher Geschwindigkeit an den Spitzen 14 entlangbewegten Strahl in Strömungsrichtung R fließen. Dadurch, daß die Spitzen 14 zumindest annähernd an die Mittellinie M des Förderkanals heranreichen, muß der Luftstrom zwangsläufig einen geschlängelten Verlauf nehmen.

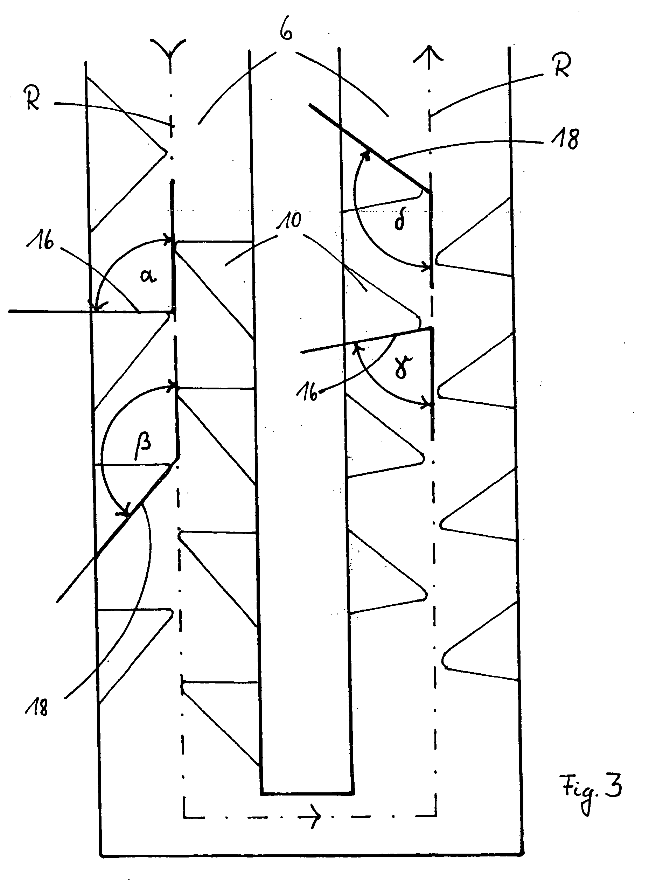

In Fig. 3 sind Beispiele dargestellt, mit welchen Anstellwinkeln die stromaufwärts und stromabwärts weisenden Flächen 16, 18 im Verhältnis zur Strömungsrichtung R versehen sein können. Bei den in Fig. 3 dargestellten Ausführungsbeispielen zeigt der Winkel α an, daß die stromaufwärts weisende Fläche 16 beispielsweise in einem Winkel von etwa 90° zur allgemeinen Strömungsrichtung R ausgerichtet sein kann. Der Winkel β zeigt für die stromabwärts weisende Fläche 18 einen Winkel von etwa 140°. Damit steht die stromabwärts weisende Fläche 18 in einem flacheren Winkel zur Strömungsrichtung R wie die stromaufwärts weisende Fläche 16. In dem nach oben gerichteten Förderabschnitt des Luftführungskanals 6 findet sich eine stromaufwärts weisende Fläche 16, die in einem Winkel γ von etwa 80° zur Strömungsrichtung R angestellt ist. Der Winkel δ weist einen Wert von etwa 125° auf, in dem die stromabwärts weisende Fläche 18 zur Strömungsrichtung R hin angestellt ist. Die Ausführungsbeispiele zeigen, daß die Anstellwinkel mit Werten versehen sein können, die sich in einem gewissen Wertebereich bewegen. Wesentlich ist jedoch das Gestaltungsmerkmal, wonach die stromaufwärts weisenden Flächen 16 einen steileren Anstellwinkel hinsichtlich der Strömungsrichtung R aufweisen wie die stromabwärts weisenden Flächen 18.

Je nachdem, welcher Anstellwinkel für die Flächen 16, 18 bzw. die Seitenwände des Schachtgehäuses gewählt wurde, können die auf diesen Oberflächen anhaftenden Partikel gut oder weniger gut in die Richtung der Sammelvorrichtung 22 ablaufen, wenn die Dämpfe auf den Flächen des Luftführungskanals 6 kondensieren oder sich die Aerosole dort niederschlagen. Die Sammelvorrichtung 22 befindet sich im unteren Bereich des Lüftungskanals 6. Wenn die stromaufwärts und stromabwärts weisenden Flächen 16, 18 eine nicht genau horizontale Lage in der Abscheidevorrichtung 2 einnehmen, so können die auf den Oberflächen der Leitelemente anhaftenden Partikel leichter nach unten hin ablaufen. Indem der Luftführungskanal 6 einen im wesentlichen nach unten und einen im wesentlichen nach oben gerichteten Förderabschnitt aufweist, kann auf einer vergleichsweise geringen Grundfläche eine lange Abscheidestrecke realisiert werden, in denen die im Verlauf dieser Strecke abgeschiedenen Partikel in die Sammelvorrichtung 22 ableitbar sind.

Die Abscheidung von Dampf und/oder Aerosolen im Verlauf des Luftführungskanals 6 wird verbessert, wenn die Flächen der Leitelemente 10 und/oder der Seitenwände des Luftführungskanals 6 von einem Kühlmedium kühlbar sind. Die Dämpfe und Aerosole weisen bei der Absaugung durch einen Ansaugstutzen 12 zunächst vergleichsweise hohe Temperaturen auf. Bei einer Abkühlung der Dämpfe und/oder Aerosole können diese entweder ihren Aggregatzustand von gasförmig zu flüssig oder von flüssig zu fest wechseln, oder die Viskosität der entsprechenden Partikel nimmt ab, so daß diese mit größerer Zähigkeit an den Wandungen der Leitelemente und/oder der Seitenwände des Luftführungskanals 6 anhaften. Durch die Kühlung der Flächen der Leitelemente und/oder der Seitenwände des Luftführungskanals 6 kann also die Abscheideleistung der Abscheidevorrichtung 2 erhöht werden. Die Kühlung der Flächen der Leitelemente 10 und/oder der Seitenwände des Luftführungskanals 6 kann durch ein Gas oder eine Flüssigkeit erfolgen, die auf den dem Luftführungskanal 6 abgewandten Oberflächen der Leitelemente 10 bzw. des Luftführungskanals 6 entlanggeführt werden. In einer Ausgestaltung der Erfindung wird als Kühlmedium kostengünstiges und umweltneutrales Wasser verwendet. Das Kühlmedium kann in Rohrleitungen zirkulieren, oder die Leitelemente 10 sind so ausgeführt, daß ihr hohler Kern als eine Leitung für das Kühlmedium verwendbar ist. Dazu müssen die Leitelemente 10 flüssigkeits- bzw. gasdicht an den Seitenwandungen des Luftführungskanals 6 befestigt sein. Bei einem geringen Montageaufwand dienen die Leitelemente 10 sowohl als Mittel für die Steuerung der Luftführung innerhalb des Luftführungskanals 6 wie auch als Kühlmittel, um eine erhöhte Abscheidung von Dämpfen und/oder Aerosolen im Luftführungskanal 6 zu bewirken.

Nach einer Ausgestaltung der Erfindung haben Oberflächen des Luftführungskanals 6 beim Abscheidebetrieb der Abscheidevorrichtung 2 eine Temperatur, die oberhalb des Taupunktes von Wasser liegt, aber niedriger ist als die Temperatur des Luftstroms und gegebenenfalls auch niedriger als die Raumluft in der Umgebung der Abscheidevorrichtung 2. Der Luftstrom im Luftführungskanal 6 kann alternativ oder zusätzlich durch die Zuführung von Kaltluft oder Kühlflüssigkeiten abgekühlt werden.

Es ist vorstellbar, daß in der Luft mitgeführte Bestandteile, die sich bei einer Kühlung des Luftführungskanals 6 auf den Flächen der Leitelemente 10 bzw. den Seitenwänden des Schachtkanals niederschlagen, dort immobil und nicht mehr fließfähig sind. Um den Luftführungskanal 6 trotzdem auf einfache und effektive Weise von abgeschiedenen Stoffen reinigen zu können, ist vorgesehen, daß der Luftführungskanal 6 auch beheizbar ausgeführt ist. Die Heizung kann in ähnlicher Weise erfolgen wie die Kühlung, beispielweise indem ein Heizmedium mit den dem Luftführungskanal 6 abgewandten Oberflächen der Leitelemente 10 bzw. des Luftförderkanals in Berührung kommt und dabei Wärmeenergie auf die entsprechenden Bauteile überträgt. Bei einer Erwärmung der Oberflächen der Leitelemente 10 sowie der Seitenwände des Luftführungskanals 6 können dort anhaftende Stoffe über ihren Schmelzpunkt hinaus aufgeheizt werden, so daß diese nach dem Überschreiten des Schmelzpunktes der Schwerkraft folgend in Richtung der Sammelvorrichtung 22 laufen und/oder tropfen. Flüssige Bestandteile können dabei Feststoffe in sich auf- und mitnehmen. Die Sammelvorrichtung 22 kann ebenfalls beheizbar und/oder kühlbar ausgebildet sein.

Wird die Abscheidevorrichtung 2 wechselweise im Kühl- und Heizbetrieb betrieben, können beispielsweise während der Kühlphase erhebliche Anteile der in dem Luftstrom bewegten Dämpfe und/oder Aerosole auf den Oberflächen der Leitelemente 10 und der Seitenwände des Luftführungskanals 6 abgeschieden und dadurch immobilisiert werden, während diese Stoffe bei einem nachträglichen Heizvorgang wieder flüssiger bzw. gasförmiger werden und den Gesetzen der Schwerkraft folgend in die Sammelvorrichtung 22 absinken können. Es ist vorteilhaft, wenn während einer Heizphase kein oder nur ein langsamer Luftstrom durch den Luftführungskanal 6 hindurchgeführt wird, um einen Großteil der abgeschiedenen Stoffe ohne weitere Störungen in der Sammelvorrichtung 22 zusammenführen zu können. Für den Heizbetrieb der Abscheidevorrichtung 2 ist deshalb in einer vorteilhaften Ausgestaltung der Erfindung der Luftführungskanal 6 mittels eines Schließelementes verschließbar, so daß kein Luftstrom oder nur ein deutlich verringerter Luftstrom während dieser Phase durch den Luftführungskanal 6 hindurchgeleitet wird.

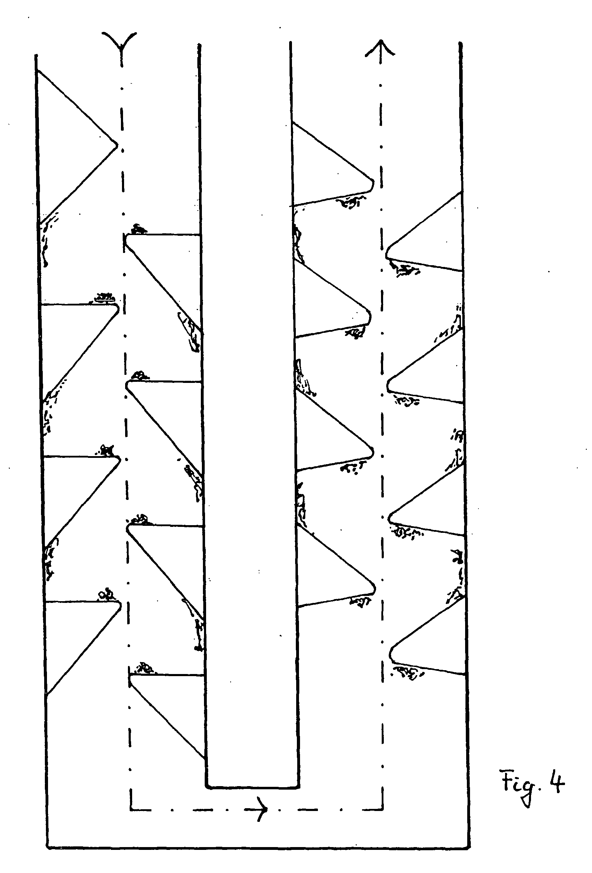

In Fig. 4 sind die Bereiche gezeigt, in denen sich in dem Luftführungskanal 6 gemäß dem Ausführungsbeispiel Dämpfe und/oder Aerosole aus einem durch den Luftführungskanal 6 bewegten Luftstrom am meisten niederschlagen. Dabei handelt es sich um die Teile der stromaufwärts weisenden Flächen 16, die benachbart zur Spitze 14 der Leitelemente 10 liegen, sowie den Teilen der stromabwärts weisenden Flächen 18, die in Strömungsrichtung R gesehen auf der stromabwärts liegenden Hälfte der stromabwärts weisenden Flächen 18 liegen. Die Dämpfe und/oder Aerosole können sich auch noch auf den daran anschließenden Seitenwänden ablagern.

Abweichend von den vorstehend erläuterten Ausführungsbeispielen kann der Fachmann die Ausführung der Abscheidevorrichtung 2 auf eine ihm günstig erscheinende Art und Weise variieren, ohne dabei die Abscheidewirkung der Abscheidevorrichtung 2 zu verlieren. Bei der Entwicklung einer Abscheidevorrichtung 2 ist es vielmehr empfehlenswert, die Ausgestaltung des Luftführungskanals 6 so abzuwandeln, daß sich für die jeweils abzuscheidenden Stoffe eine günstige Abscheidewirkung ergibt.

## Patentansprüche

1. Vorrichtung (2) zur Abscheidung von dampfförmigen Stoffen und/oder Aerosolen mit einem Gebläse, zumindest einer Ansaugöffnung (4), einem Luftführungskanal (6) mit einer mehrfachen Umlenkung der Strömungsrichtung des Luftstroms und zumindest einer Ausblasöffnung (8), wobei der Luftführungskanal (6) eine Anzahl von Leitelementen (10) aufweist, durch die über eine Förderstrecke der Luftstrom in alternierende Richtungen geleitet wird, wobei in den Luftführungskanal (6) ragende Spitzen (14) der Leitelemente (10) über eine Förderstrecke einen im wesentlichen gleichmäßigen Abstand aufweisen und die Spitzen (14) zumindest annähernd an die Mittellinie (M) des Luftführungskanals (6) heranreichen, und die stromaufwärts weisenden Flächen (16) eines jeweiligen Leitelementes (10) in einem steileren Winkel zu einer allgemeinen Strömungsrichtung (R) des Luftstroms stehen als dessen stromabwärts weisenden Flächen (18), **dadurch gekennzeichnet, dass** der Luftführungskanal (6) einen im wesentlichen nach unten und einen im wesentlichen nach oben gerichteten Förderabschnitt aufweist, wobei im Übergangsbereich (20) vom im wesentlichen nach unten zum im wesentlichen nach oben gerichteten Förderabschnitt eine Sammelvorrichtung (22) zur Ansammlung von flüssigen Niederschlägen angeordnet ist.

2. Vorrichtung (2) nach Anspruch 1, **dadurch gekennzeichnet, dass** die Flächen (16, 18) der Leitelemente (10) und/oder die Seitenwände des Luftführungskanals (6) von einem Kühlmedium kühlbar sind.

3. Vorrichtung (2) nach Anspruch 1 oder Anspruch 2, **dadurch gekennzeichnet, dass** die Flächen (16, 18) der Leitelemente (10) und/oder die Seitenwände des Luftführungskanals (6) von einem Heizmedium beheizbar sind.

4. Vorrichtung (2) nach einem der vorhergehenden Ansprüche, **dadurch gekennzeichnet, dass** die Flächen (16, 18) der Leitelemente (10) wechselweise kühl- und beheizbar sind.

## Claims

1. A device (2) for separating vaporous substances and/or aerosols comprising a blower, at least one intake opening (4), an air guiding channel (6) providing for multiple deflections of the flow direction of the air flow, and at least one exhaust opening (8), wherein the air guiding channel (6) includes a number of guiding elements (10), by means of which, along a conveying length, the air flow is guided in alternating directions, wherein tips (14) of the guiding elements (10) projecting into the air guiding channel (6), along a conveying length, have a substantially uniform distance and wherein the tips (14) at least approximately reach the central line (M) of the air guiding channel (6), and wherein the faces (16) of a respective guiding element (10) that are orientated in a upstream direction are disposed in a more acute angle with respect to a general flow direction (R) of the air flow than the faces (18) thereof that are orientated in a downstream direction, **characterized in that** the air guiding channel (6) comprises a conveying portion substantially directed downwards and a conveying portion substantially directed upwards, wherein a collection device (22) is located in a transition region from the conveying portion substantially directed downwards to the conveying portion substantially directed upwards for collecting liquid depositions.

2. The device (2) of claim 1, **characterized in that** the faces (16, 18) of the guiding elements (10) and/or the side walls of the air guiding channel (6) can be cooled by means of a cooling medium.

3. The device (2) of claim 1 or claim 2, **characterized in that** the faces (16, 18) of the guiding elements (10) and/or the side walls of the air guiding channel (6) can be heated by means of a heating medium.

4. The device (2) of any one of the preceding claims, **characterized in that** the faces (16, 18) of the guiding elements (10) can be cooled and heated alternately.

## Revendications

1. Dispositif (2) pour la séparation de substances sous forme de vapeur et/ou d'aérosols comportant une soufflante, au moins un orifice d'aspiration (4), un canal de guidage d'air (6) ayant une déflexion multiple de la direction d'écoulement du courant d'air et au moins un orifice de soufflage (8), tandis que le canal de guidage d'air (6) présente une pluralité d'éléments de guidage (10), à travers lesquels le courant d'air est conduit dans des directions alternées par l'intermédiaire d'une voie d'acheminement, tandis que les extrémités (14) des éléments de guidage (10) pénétrant dans le canal de guidage d'air (6) par l'intermédiaire d'une voie d'acheminement présentent un espacement substantiellement régulier et que les extrémités (14) arrivent au moins à proximité de la ligne médiane (M) du canal de guidage d'air (6), et les surfaces (16) orientées en amont d'un élément de guidage respectif (10) forment avec une direction générale d'écoulement (R) du courant d'air un angle plus obtus que ses surfaces orientées vers l'aval (18), **caractérisé en ce que** le canal de guidage d'air (6) présente un tronçon de transport dirigé substantiellement vers le bas et un tronçon de transport dirigé substantiellement vers le haut, tandis que dans la zone de transition (20) allant du tronçon de transport dirigé substantiellement vers le bas à celui dirigé substantiellement vers le bas est placé un dispositif collecteur (22) pour recueillir les précipitations liquides.

2. Dispositif (2) selon la revendication 1, **caractérisé en ce que** les surfaces (16, 18) des éléments de guidage (10) et/ou les parois latérales du canal de guidage d'air (6) peuvent être refroidies par un milieu réfrigérant.

3. Dispositif (2) selon la revendication 1 ou la revendication 2, **caractérisé en ce que** les surfaces (16, 18) des éléments de guidage (10) et/ou les parois latérales du canal de guidage d'air (6) peuvent être chauffées par un milieu chauffant.

4. Dispositif (2) selon l'une des revendications précédentes, **caractérisé en ce que** les surfaces (16, 18) des éléments de guidage (10) peuvent être alternativement refroidies et chauffées.
